# EUROPEAN PATENT SPECIFICATION

(11) **EP 2 064 469 B1**
(45) Date of publication and mention of the grant of the patent: **31.03.2010**
(21) Application number: 07826245.8
(22) Date of filing: 04.09.2007
(51) Int. Cl.: F16K 11/052

(54) **ELECTRICALLY CONTROLLED VALVE**
ELEKTRISCH GESTEUERTES VENTIL
ROBINET À COMMANDE ÉLECTRIQUE

(30) Priority: 08.09.2006 IT TO20060644
(43) Date of publication of application: 03.06.2009
(73) Proprietor: Elbi International SPA, 10129 Torino (IT)
(72) Inventor: FARANO, Michele, I-10137 Torino (IT)
(74) Representative: Quinterno, Giuseppe
(86) International application number: PCT/IB2007/053547
(87) International publication number: WO 2008/029342

(56) References cited:
- EP-A- 1 132 581
- DE-U1- 8 908 558
- US-A- 2 851 648

## Description

The present invention relates to an electrically controlled valve according to the preamble of the accompanying Claim 1. Document EP 1 132 581 shows an electromagnetically actuated valve with toggle mechanism.

One object of the present invention is to provide a valve of the type specified above, which is particularly reliable, which allows rapid switching between the working positions of the obturator, which has a low electric power consumption and which at the same time may be produced in a simple and low-cost manner.

These and other objects are achieved according to the present invention by means of an electrically controlled valve of the type specified above and further defined by the characterising part of the accompanying Claim 1.

Further characteristic features and advantages of the invention will become clear from the detailed description which follows, provided purely by way of a non-limiting example, with reference to the accompanying drawings in which:
Figure 1 is a perspective view of an example of embodiment of an electrically controlled valve according to the present invention;
Figure 2 is a longitudinally sectioned view of the valve shown in Figure 1, taken along the plane defined by the line II-II;
Figure 3 is a longitudinally sectioned view of the valve shown in Figure 1, taken along the plane defined by the line III-III;
Figure 4 is a sectioned view of the valve shown in Figure 3, taken along the plane defined by the line IV-IV; and
Figure 5 is a detailed view of a toggle mechanism partly visible in Figure 4, consisting of a section along the plane defined by the line V-V of Figure 3.

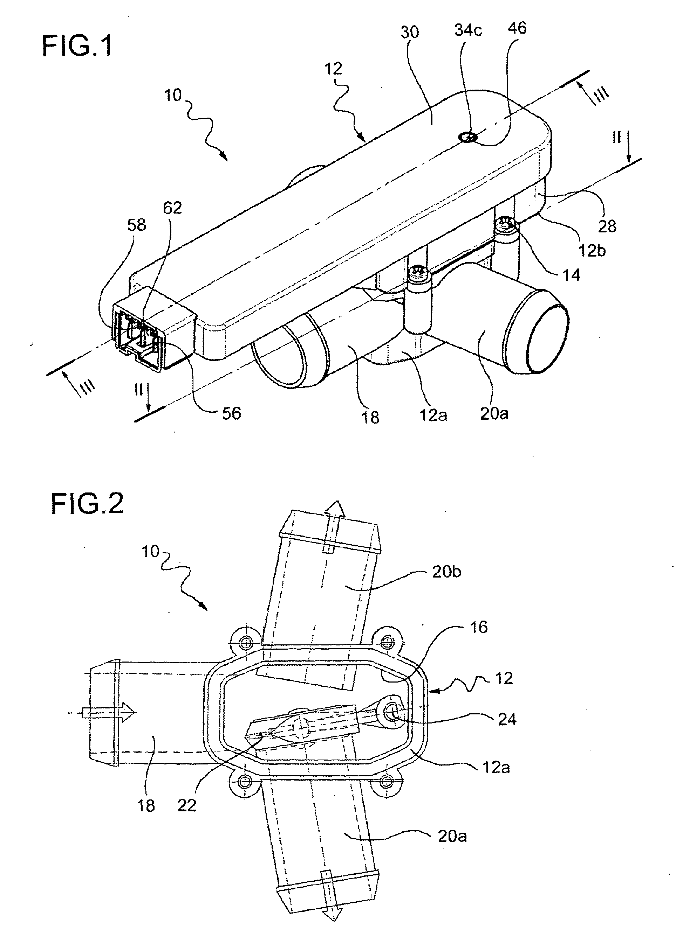

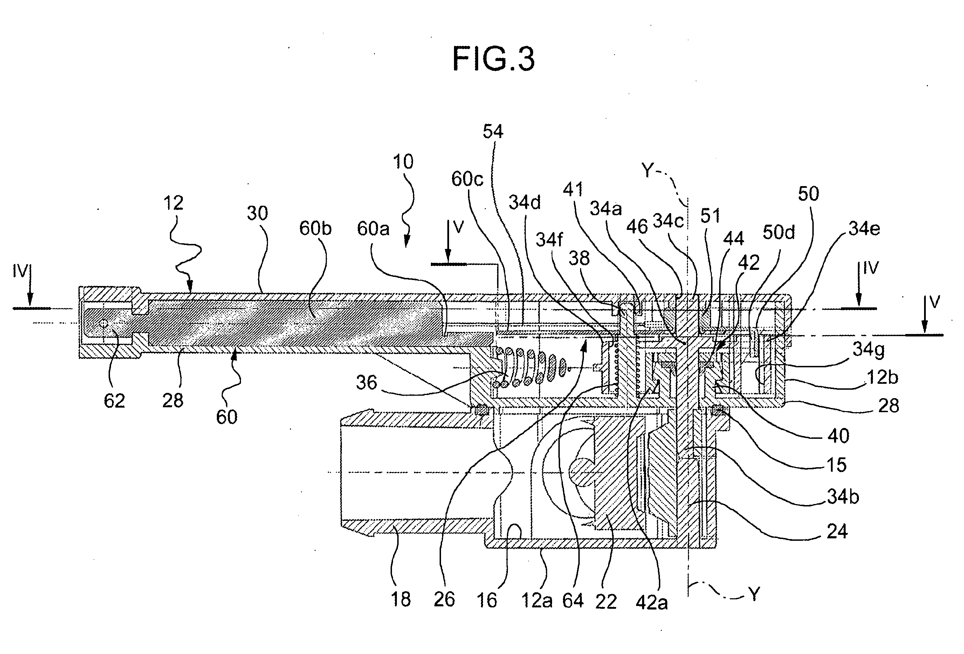

With reference to Figure 1, 10 denotes overall an example of embodiment of an electrically controlled valve according to the present invention. Particularly but not exclusively, the valve 10 is suitable for use in the field of electric household appliances (for example in the field of washing machines) and comprises a support structure with which the reference number 12 is globally associated. The support structure 12 comprises preferably a lower housing and upper housing 12a, 12b, which are connected stably together by means of four fixing screws 14. A seal 15 (visible only in Figure 3) is advantageously arranged between the upper housing and lower housing 12a, 12b.

With reference in particular to Figure 2, the lower housing 12a of the support structure 12 has, defined inside it, a chamber 16 which is able to be passed through by a flow of fluid (for example water) and into which an inlet connection 18, a first outlet connection 20a and conveniently also a second outlet connection 20b for said fluid flow converge. The inlet connection 18 is intended to be operationally connected to a delivery duct (not shown), while the outlet connections 20a, 20b are respectively able to be connected to respective user ducts (not shown). Inside the chamber 16 there is mounted an obturator 22 operationally movable, preferably in an oscillating manner about an axis of rotation Y-Y (Figure 3), relative to the support structure 12 between a first working position (Figure 2), where it closes off the first outlet connection 20a and respectively clears the second outlet connection 20b, and a second working position (not shown), where it clears the first outlet connection 20a and closes off the second outlet connection 20b. In the embodiment shown, the obturator 22 is advantageously of the type comprising an oscillating disc, rotatable about a pin 24 (Figures 2 and 3) projecting inside the chamber 16 from a bottom wall of the lower housing 12a.

With reference in particular to Figures 3, 4 and 5, the upper housing 12b, which conveniently houses an electrically controlled operating device denoted overall by the reference number 26, will now be described.

With reference in particular to Figure 3, the upper housing 12b comprises preferably a half-shell 28 and an upper lid 30, which are joined together in one of the ways known to a person skilled in the art, for example by means of snap-engagement. The upper housing 12b is joined to the lower housing 12a advantageously so as to form a fluid-tight seal between the chamber 16 and the electrically controlled operating device 26.

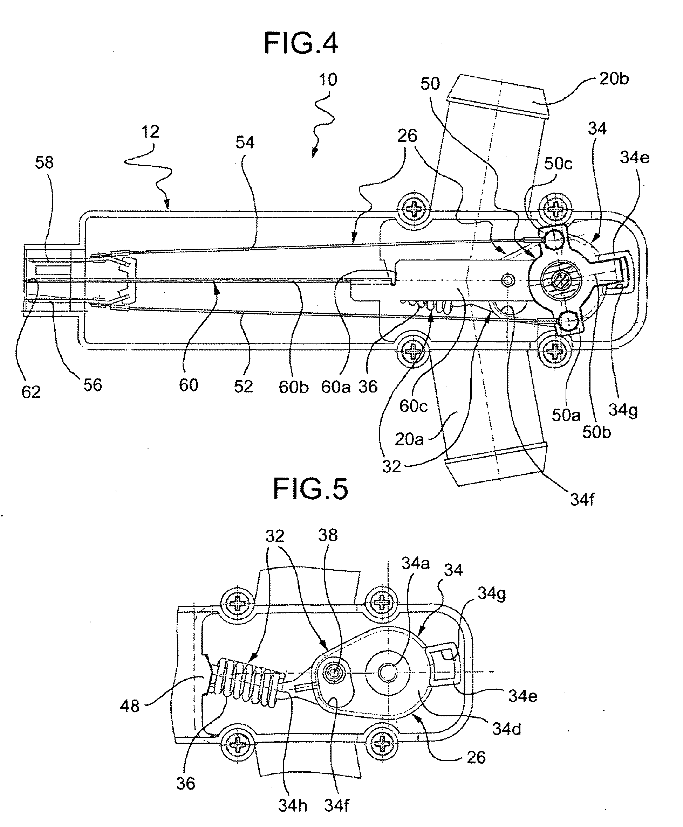

As can be seen more clearly in Figures 4 and 5, the operating mechanism 26 comprises a toggle mechanism 32 (Figure 5) able to assume two stable positions, i.e. a first working configuration (Figures 3 to 5) and a second working configuration (not shown), and mechanically connected to the obturator 22. The toggle mechanism 32 comprises a rigid member 34 mounted rotatably with respect to the upper housing 12b and a resilient member 36 (for example, a helical spring) arranged between the rigid member 34 and a side wall of the lower housing 12b.

With reference in particular to Figures 3 and 5, the rigid member 34 is preferably formed as one piece and comprises a central pivot pin 34a which defines an axis of rotation, suitably coinciding with the axis of rotation Y-Y, and which comprises a bottom end 34b and top end 34c. In an advantageous manner, from a middle section of the central pivot pin 34a a shaped portion 34d having a substantially cup-shaped form directed downwards when viewing Figure 3 extends radially. On diametrically opposite sides of the central pivot pin 34a, conveniently the shaped portion 34d has on one side an appendage 34e with a through-hole 34g (Figure 5), the axis of which is parallel to the axis of rotation Y-Y, and on the other side an eyelet 34f (Figures 4 and 5) situated at the top and formed substantially in the manner of an annulus sector when viewing Figure 5. Preferably, on the side of the eyelet 34f the shaped portion 34d has a nose-like protuberance 34h radially projecting from the pivot pin 34a.

As can be seen in Figure 3, preferably the bottom wall of the half-shell 28 of the upper housing 12b has, projecting internally therefrom, a second pin 38, which passes through the eyelet 34f, and a substantially hollow mushroom-like formation 40 which is open towards the lower housing 12a and communicates with the chamber 16. During assembly, the end of the second pin 38 is advantageously inserted inside a seat 41 formed as a hollow cylindrical projection projecting internally from the lid 30 of the upper housing 12b. As will be described below, the second pin 38 and the eyelet 34f perform the function of end-of-travel elements for the rigid member 34.

A centring member 42 (visible only in Figure 3) shaped substantially in the manner of a cup and having a cylindrical peripheral rim 42a operationally directed downwards is conveniently keyed around the pivot pin 34a. The peripheral rim 42a and the mushroom-like formation 40 have a substantially matching shape so as to form together a fast pressure-operated interference joint of the rotary type. This joint ensures centring of the pivot pin 34a, which passes through the mushroom-like formation 40 and the centring member 42, relative to the support structure 12. An annular seal 44, suitable for reducing the friction between these components and at the same time ensuring a fluid-tight seal between the lower and upper housing 12a, 12b, is advantageously arranged between the peripheral rim 42a, the mushroom-like formation 40 and the pivot pin 34a.

The bottom end 34b of the pivot pin 34a, which passes through the annular seal 44 and the mushroom-like formation 40, projects into the chamber 16 of the lower housing 12a and is keyed into the obturator 22. Advantageously, assembly of the valve 10 envisages that the obturator 22, the pin 24 and the pivot pin 34a are coaxial, so that this obturator 22 and the rigid member 34 are rotationally locked about the axis Y-Y.

Advantageously the top end 34c of the pivot pin 34a projects into an opening 46 (indicated only in Figures 1 and 3) formed in the lid 30 of the upper housing 12b, so as to constrain further the rotation of the rigid member 34 about the axis Y-Y.

The resilient member 36 tends to retain stably the toggle mechanism 32 in the first or second configuration corresponding, respectively, to the first and second working positions of the obturator 22. With reference to Figure 5, the resilient member 36 preferably presses on one side against a conical projection 48 situated in a side wall of the upper housing 12b and on the other side against the nose-like portion 34h of the rigid member 34.

With reference in particular to Figures 3 and 4, advantageously the toggle mechanism 32 also comprises a middle member 50 kinematically arranged between the rigid member 34 and the first and second actuator means 52, 54, which will be described below.

The middle member 50 has a central opening (not numbered) passed through by the top end 34c of the pivot pin 34a so as to allow rotation of this middle member 50 with respect to the rigid member 34 advantageously about the same axis of rotation Y-Y. In order to reduce the friction between the pivot pin 34a and the edges of the central opening of the middle member 50, a bush 51 is conveniently arranged between them, said bush at the same time also helping to ensure centring thereof with respect to the axis Y-Y. As will be clarified below, the middle member 50 is conveniently made of an electrically conducting material, has a substantially laminar thickness and is provided with three projecting portions (Figure 4) having the form of radial arms 50a, 50b and 50c. Advantageously, the first and third arms 50a and 50c are situated diametricallty opposite each other relative to the axis of rotation Y-Y, while the second arm 50b is directed perpendicularly with respect to the direction defined by them.

The second arm 50b has suitably a curved end 50d (Figure 3) directed downwards and seated with lateral play (Figure 4) inside the cavity 34g of the rigid member 34. As will be described below the second arm 50b, with its curved end 50d, and the cavity 34g perform the function of relative driving portions co-operating with each other.

With reference in particular to Figures 3 and 4, the upper housing 12b encloses advantageously first and second actuator members which can be activated by means of electric control and are kinematically linked to the rigid member 34. Conveniently, the first and second actuator members are formed in the manner of a first and a second shape-memory conductor wire 52, 54, which are kinematically connected to the rigid member 34. In a manner known per se, these shape-memory conductor wires are able to pass, when activated by means of an electric current passing through them, as a result of heating due to the Joule effect from an elongated (or rest) condition into a contracted (or tensile) condition. Subsequently, when they are deactivated, as a result of cooling they return into their initial elongated condition. The first and second shape-memory conductor wires 52, 54 have respective first end terminals connected in a manner known per se electrically and mechanically to the first arm 50a and to the third arm 50c of the middle member 50, while their ends opposite to the first ends are connected electrically to a respective first and second input terminal 56, 58 of the contact-strip type projecting outside the upper housing 12b.

In this way the first and second shape-memory conductor wires 52, 54 act on opposite sides with respect to the axis of rotation Y-Y of the rigid member 34.

As can be seen in Figures 3 and 4, the upper housing 12b conveniently contains a conducting formation 60 electrically connected between the first and second shape-memory conductor wires 52, 54 and an electrically conducting portion of the toggle mechanism 26, preferably the middle member 50, respectively.

Advantageously the conducting formation 60 is formed from a thin strip partly cut in a middle portion thereof so as to produce an incision 60a (Figure 3) which extends over a part of the width of this strip. Subsequently the abovementioned strip is folded in a longitudinal direction so that, when it is inserted into the upper housing 12b in the manner shown in Figure 3, the conducting formation has a first laminar portion 60b and a second laminar portion 60c which are respectively perpendicular to each other.

With reference to Figure 3, the first laminar portion 60b has a common output terminal 62 of the contact-strip type projecting outside of the upper housing 12b and is retained between portions of the half-shell 28 and the lid 30.

The second laminar portion 60c has optionally a central hole (not numbered) passed through by and coaxial with the pivot pin 34a and extends below the conducting portion of the toggle mechanism 32, namely the middle member 50, forming an electrical contact making sliding contact with the latter. Therefore the middle member 50 assumes the function of a "brush" able to establish an electrical connection between the second laminar portion 60c of the conducting formation 60 and the first and second shape-memory conductor wires 52, 54. The input terminals 56, 58 and the common output terminal 62 are respectively connected by a control circuit, not shown.

In an advantageous manner, the second laminar portion 60c and the bottom of the half-shell 28 of the upper housing 12b have, arranged between them, a resilient thrust member able to push this second laminar portion 60c, keeping it in electrical contact with the middle member 50. Preferably, the resilient thrust member is a helical spring 64 (Figure 3) located around the pivot pin 34a.

The operating principle of the electric valve 10 will now be described.

With reference to the drawings, the electric valve 10 is shown with the obturator 22 arranged in the first working position, corresponding to the first working configuration of the toggle mechanism 32, where the first and second shape-memory conductor wires 52, 54 are deactivated, namely are in a rest condition where they are not electrically excited.

In the case where it is required to pass from the first into the second working position of the obturator 22, it is necessary for the control circuit to cause electric current to flow inside the first shape-memory conductor wire 52, activating it, while the second shape-memory conductor wire 54 remains deactivated. The electric current therefore flows from the input terminal 56, travels along the first shape-memory conductor wire 52 which therefore assumes a contracted condition, passes through the middle member 50 and the conducting formation 60, continuing into the common output terminal 62, closing the control circuit.

Therefore, when the first wire 52 is activated and the second wire 54 is deactivated, switching of the toggle mechanism 32 from the first into the second configuration is performed, imparting an oscillating movement to the rigid member 34 in the manner now described.

Preferably, owing to activation of the first shape-memory conductor wire 52, the rigid member 34 and the middle member 50 are locked rotationally together.

In particular, during a first stage of activation of the first shape-memory conductor wire 52, the middle member 50 performs an idle travel movement, being rotationally displaced with respect to the rigid member 34, in a clockwise direction when viewing Figures 4 and 5. This first stage corresponds to the movement of the second arm 50b (which acts as first driving portion), of the middle member 50, inside the cavity 34g (which acts as second driving portion), formed in the rigid member 34. During a second stage of activation of the abovementioned first wire 52 (namely when the play between the second arm 50b and the cavity 34g is eliminated), the second arm 50b engages, coming into contact with the walls of the cavity 34g. In this way, as a result of activation of the first wire 52, the rigid member 34 is subsequently rotationally driven (in the clockwise direction when viewing Figures 4 and 5) by the second arm 50b and is therefore displaced into the second configuration of the toggle mechanism 32. Consequently the obturator 22, integral with the rigid member 34, also rotates in the clockwise direction (when viewing Figure 2) and frees the first outlet connection 20a, closing off the second outlet connection 20b, thus reaching the second working position.

It can be noted that the conductor wires 52, 54 in the respective elongated conditions have a certain tensile elasticity and therefore contraction of the first wire 52 produces a slight further elongation of the second wire 54, therefore allowing rotation of the middle member 50.

Advantageously, when the toggle mechanism 32 moves into the second configuration, the edges of the eyelet 34f of the rigid member 34 slide in a guided manner on the second pin 38. When the toggle mechanism 32 is in the second configuration, a further rotation of the rigid member 34 would be stopped since the edges of the eyelet 34f would come into contact with the second pin 38, therefore acting as stopper elements.

Subsequently, the control circuit interrupts the current flowing in the first shape-memory conductor wire 52 which may thus cool, assuming again the initial elongated condition.

At the same time, as a result of the action of the helical thrust spring 62, the toggle mechanism 32 remains stably in the second configuration, keeping the obturator 22 in the second position.

In order to cause the return of the toggle mechanism 32 into the first configuration, bringing the obturator 22 back into the first position, the control circuit must cause current to pass between the second input terminal 58 and the common output terminal 62, activating the second shape-memory conductor wire 54. In this way the mechanism described above is operated in the reverse direction, causing the electric valve 10 to assume again the same configuration shown in the drawings.

In the example of embodiment shown, the valve 10 is a two-state, three-way, electric deviator valve. However, as will be obvious to a person skilled in the art, the present invention may be adapted to different types of electric valves, for example a two-way (or intercept) valve, or valves wherein it is not involved complete closure of the outlet connections, only a different distribution of the flows between the outlet connections depending on the position of the obturator.

Moreover, the persons skilled in the art will understand that the obturator may also be of a different type, for example an axial or sliding obturator may be used, after suitably arranging suitable transmission members (for example gearwheels, a pinion co-operating with a rack, etc.) between the operating device 26 and the obturator 22.

Finally, it may be noted that in embodiments not shown, the middle member may also be dispensed with and the shape-memory conductor wires could also be directly connected to the rigid member, although this variant is less preferred than the example described above. In fact, in this case only the parts of the rigid member which are entirely contained in the upper housing could be made of electrically conducting material, otherwise there would be the risk of electric current also spreading into the lower housing through which the fluid is intended to pass.

Obviously, without modifying the principle of the invention, the embodiments and the constructional details may be greatly varied with respect to that described and illustrated purely by way of a non-limiting example, without thereby departing from the scope of the invention as defined in the accompanying claims.

## Claims

1. Electrically controlled valve (10), in particular for a washing machine, comprising
* a support structure (12) having, defined internally, a chamber (16) able to be passed through by a fluid flow and having an inlet (18) and at least one first outlet (20a; 20b) for said fluid flow;
* an obturator (22) operationally movable inside said chamber (16) between a first and second working position, in which it respectively closes off and clears, at least partly, the first outlet (20a; 20b); and
* electrically controlled operating means (26) associated with said obturator (22) and able to cause switching of the obturator (22) into the first and second working positions;
said valve (10) being **characterized in that** the operating means (26) include
* a toggle mechanism (32) able to assume two stable positions and mechanically connected to the obturator (22), and comprising
- a rigid member (34) mounted rotatable with respect to the support structure (12) and
- a resilient member (36) arranged between said rigid member (34) and the support structure (12), and tending to retain stably the toggle mechanism (32) in a first or a second configuration corresponding, respectively, to the first and second working position of the obturator (22); and
* first and second actuator means (52, 54) which are able to be activated by means of electric control, are kinematically linked to the rigid member (34) and are able to assume a first/second arrangement, when the first and second actuator means (52/54) are activated/deactivated respectively, imparting an oscillating movement to the rigid member (34) of the toggle mechanism (32), causing switching thereof into the second/first configuration respectively.

2. Valve according to Claim 1, in which the chamber (16) has a second outlet (20b) for the fluid flow, and the obturator (22), when it assumes the first/second position, closes off the first/second outlet (20a/20b) and clears the second/first outlet (20b/20a).

3. Valve according to Claim 1 or 2, in which said first/second actuator means (52, 54) are able, when activated, to pass from an elongated or rest condition into a contracted or tensile condition where they drive the rigid member (34), moving it into the second/first configuration of the toggle mechanism (32).

4. Valve according to Claim 3, in which the first/second actuator means comprise a first/second shape-memory conductor wire (52/54) kinematically connected to the rigid member (34).

5. Valve according to any one of the preceding claims in which the first and second actuator means (52, 54) act on opposite sides with respect to the axis of rotation (Y-Y) of the rigid member (34).

6. Valve according to any one of the preceding claims, in which the toggle mechanism (26) also comprises a middle member (50) kinematically arranged between the rigid member (34) and the first and second actuator means (52, 54).

7. Valve according to Claim 6, in which the middle member (50) and the rigid member (34) comprise respectively a first and a second driving portion (50b, 34g) which co-operate together and, owing to activation of the first/second actuator means (52/54), lock together rotationally the rigid member (34) and the middle member (50).

8. Valve according to Claim 7, in which
- during a first stage of activation of the first/second actuator means (52/54), the middle member (50) performs an idle travel movement, being displaced with respect to the rigid member (34); and
- during a second stage of activation of the first/second actuator means (52/54), the first driving portion (50b) engages with the second driving portion (34g), causing the middle member (50) to be locked in rotation with the rigid member (34) and allowing switching of the toggle mechanism (32) into the second/first working configuration.

9. Valve according to Claim 8, in which:
- the first driving portion is a projecting portion (50b) of the middle member (50), and
- the second driving portion is a cavity (34g) formed in the rigid member (34) and seating with play the projecting portion (50b) which, during said second stage, is able to come into contact with the walls of said cavity (34g).

10. Valve according to Claim 9, in which the projecting portion of the middle member (50) is a first radial arm (50b).

11. Valve according to any one of Claims 6 to 10, in which the middle member (50) has a second and a third arm (50a, 50c) which are directed radially and which are connected respectively to the first and second actuator means (52, 54).

12. Valve according to Claim 11, in which the second and third arm (50a, 50c) are situated diametrically opposite each other.

13. Valve according to any one of Claims 5 to 12, in which the middle member (50) is rotatable about the same axis of rotation (Y-Y) of the rigid member (34).

14. Valve according to any one of the preceding claims, in which the toggle mechanism (32) has an electrically conducting portion (50) electrically connected to the first and second actuator means (52, 54); said first and second actuator means (52, 54) being respectively connected to a first and second input terminal (56, 58); said valve (10) also comprising
* a conducting formation (60) which is associated with the support structure (12), includes an output terminal (62), is electrically connected between the conducting portion (50) of the toggle mechanism (26) and the output terminal (62) and is able to allow an electric current to pass between the first/second input terminal (56/58) and the output terminal (62), respectively activating the first/second actuator means (52, 54) and passing through the electrically conducting portion (50).

15. Valve according to Claim 14, in which the conducting portion (50) of the toggle mechanism (32) is able to provide an electric connection between said conducting formation (60) and the first and second actuator means (52, 54) by means of a sliding electric contact.

16. Valve according to Claim 15, also comprising resilient thrust means (64) arranged between the conducting formation (60) and the support structure (12) and able to push the conducting formation (60), keeping it in electrical contact with the conducting portion (50) of the toggle mechanism (32).

17. Valve according to any one of Claims 14 to 16 when dependent on one of Claims 6 to 13, in which the electrically conducting portion of the toggle mechanism (32) is the middle member (50).

18. Valve according to any one of the preceding claims, comprising stopper means (34f, 38) intended to stop rotation of the rigid member (34) when the toggle mechanism is in the first or second configuration.

19. Valve according to Claim 18, in which the stopper means comprise:
- a pin (38) integral with the support structure (12);
- an eyelet (34f) which is formed in the rigid member (34) and passed through by the pin (38) and the edges of which are slidable in a guided manner on said pin (38) and able to come into contact with the latter when the toggle mechanism (32) is in the first or second configuration.

20. Valve according to any one of the preceding claims, in which the obturator (22) is mounted so as to oscillate with respect to the support structure (12).

21. Valve according to Claim 20, in which the obturator (22) is rotationally locked with the rigid member (34).

22. Valve according to any one of the preceding claims, in which the operating means (26) are enclosed by the support structure (12) so as to form a fluid-tight seal with respect to the chamber (16).

## Patentansprüche

1. Elektrisch-gesteuertes Ventil (10), insbesondere für eine Waschmaschine, welches umfasst:
* einen Lageraufbau (12), der intern begrenzt eine Kammer (16) hat, durch welche ein Fluidfluss strömen kann und welche einen Einlass (18) und zumindest einen ersten Auslass (20a; 20b) für den Fluidfluss hat;
* ein Absperrorgan (22), welches im Betrieb innerhalb der Kammer (16) zwischen einer ersten und einer zweiten Arbeitsposition bewegbar ist, in welcher dieses entsprechend zumindest teilweise den ersten Auslass (20a; 20b) verschließt und freimacht; und
* eine elektrisch-gesteuerte Betätigungseinrichtung (26), die mit dem Absperrorgan (22) verknüpft ist und in der Lage ist, das Schalten des Absperrorgans (22) auf die erste und zweite Arbeitsposition zu bewirken;
wobei das Ventil (10) **dadurch gekennzeichnet ist, dass** die Betätigungseinrichtung (26) aufweist:
* einen Umschaltemechanismus (22), der in der Lage ist, zwei stabile Positionen anzunehmen und der mechanisch mit dem Absperrorgan (22) verbunden ist, und umfasst:
- ein starres Element (34), welches drehbar in Bezug auf den Lageraufbau (12) befestigt ist, und
- ein Federelement (36), welches zwischen dem starren Element (34) und dem Lageraufbau (12) angeordnet ist und dazu neigt, den Umschaltemechanismus (32) in einer ersten oder einer zweiten Stellung entsprechend der ersten und der zweiten Arbeitsposition des Absperrorgans (22) stabil zu halten; und
* eine erste und eine zweite Stellgliedeinrichtung (52, 54), die in der Lage sind, mittels elektrischer Steuerung aktiviert zu werden, die kinematisch mit dem starren Element (34) verbunden sind und in der Lage sind, eine erste/zweite Anordnung anzunehmen, wenn die erste und die zweite Stellgliedeinrichtung (52/54) entsprechend aktiviert/deaktiviert sind, wobei dem starren Element (34) des Umschaltemechanismus (32) eine Schwingungsbewegung verliehen wird, wodurch dessen Schalten in die zweite/erste Stellung entsprechend bewirkt wird.

2. Ventil nach Anspruch 1, bei dem die Kammer (16) einen zweiten Auslass (20b) für den Fluidfluss hat, und das Absperrorgan (22), welche die erste/zweite Position einnimmt, den ersten/zweiten Auslass (20a/20b) verschließt und den zweiten/ersten Auslass (20b/20a) freimacht.

3. Ventil nach Anspruch 1 oder 2, bei dem die erste/zweite Stellgliedeinrichtung (52, 54) in der Lage sind, wenn aktiviert, von einem langgestreckten oder Ruhezustand in einem zusammengezogenen oder Zugzustand zu laufen, wo sie das starre Element (34) antreiben, um dies auf die zweite/erste Stellung des Umschaltemechanismus (32) zu bewegen.

4. Ventil nach Anspruch 3, bei dem die erste/zweite Stellgliedeinrichtung einen ersten/zweiten Formspeicher-Leiterdraht (52/54) umfasst, der kinematisch mit dem starren Element (34) verbunden ist.

5. Ventil nach einem der vorhergehenden Ansprüche, bei dem die erste und die zweite Stellgliedeinrichtung (52, 54) auf abgewandte Seiten in Bezug auf die Drehachse (Y-Y) des starren Elements (34) wirkt.

6. Ventil nach einem der vorhergehenden Ansprüche, bei dem der Umschaltemechanismus (34) außerdem ein mittleres Element (50) umfasst, welche kinematisch zwischen dem starren Element (34) und der ersten und der zweiten Stellgliedeinrichtung (52, 54) angeordnet ist.

7. Ventil nach Anspruch 6, bei dem das mittlere Element (50) und das starre Element (34) entsprechend ein erstes und ein zweites treibendes Teil (50b, 34g) umfassen, die funktionsmäßig zusammenwirken und aufgrund von Aktivierung der ersten/zweiten Stellgliedeinrichtung (52/54) zusammen drehfest das starre Element (34) und das mittlere Element (50) verriegeln.

8. Ventil nach Anspruch 7, wobei
- während einer ersten Aktivierungsstufe der ersten/zweiten Stellgliedeinrichtung (52/54) das mittlere Element (50) eine Leerlaufbewegung durchführt, wobei es in Bezug auf das starre Element (34) versetzt ist; und
- während einer zweiten Aktivierungsstufe der ersten/zweiten Stellgliedeinrichtung (52/54) das erste treibende Teil (50b) in Eingriff ist mit dem zweiten treibenden Teil (34g), um zu bewirken, dass das mittlere Element (50) drehfest mit dem starren Element (34) verriegelt ist und das Schalten des Umschaltmechanismus (32) in die zweite/erste Arbeitsstellung zulässt.

9. Ventil nach Anspruch 8, wobei:
- das erste treibende Teil ein hervortretendes Teil (50b) des mittleren Elements (50) ist, und
- das zweite antreibende Teil eine Ausnehmung (34g) ist, welche im starren Element (34) gebildet ist und mit Spiel das hervortretende Teil (50b) lagert, welches, während der zweiten Stufe in der Lage ist, in Kontakt mit den Wänden der Ausnehmung (34g) zu kommen.

10. Ventil nach Anspruch 9, bei dem das hervortretende Teil des mittleren Elements (50) ein erster radialer Arm (50b) ist.

11. Ventil nach einem der Ansprüche 6 bis 10, bei dem das mittlere Element (50) einen zweiten und einen dritten Arm (50a, 50c) hat, welche radial ausgerichtet sind und welche entsprechend mit der ersten und der zweiten Stellgliedeinrichtung (52, 54) verbunden sind.

12. Ventil nach Anspruch 11, bei dem der zweite und der dritte Arm (50a, 50c) diametral voneinander abgewandt angeordnet sind.

13. Ventil nach einem der Ansprüche 5 bis 12, bei dem das mittlere Element (50) um die gleiche Drehachse (Y-Y) des starren Elements (34) herum drehbar ist.

14. Ventil nach einem der vorhergehenden Ansprüche, bei dem der Umschaltemechanismus (32) ein elektrisch-leitendes Teil (50) hat, welches elektrisch mit der ersten und der zweiten Stellgliedeinrichtung (52, 54) verbunden ist, wobei die erste bzw. die zweite Stellgliedeinrichtung (52, 54) mit einem ersten und einem zweiten Eingangsanschluss (56, 58) verbunden ist; wobei das Ventil (10) außerdem umfasst:
* eine Leitanordnung (60), die mit dem Lageraufbau (12) verbunden ist, einen Ausgangsanschluss (62) aufweist, elektrisch verbunden ist zwischen dem leitenden Teil (50) des Umschaltemechanismus (26) und dem Ausgangsanschluss (62) und in der Lage ist, zuzulassen, dass ein elektrischer Strom zwischen dem ersten/zweiten Eingangsanschluss (56/58) und dem Ausgangsanschluss (62) fließt, um entsprechend die erste/zweite Stellgliedeinrichtung (52, 54) zu aktivieren und durch das elektrisch-leitende Teil (50) zu laufen.

15. Ventil nach Anspruch 14, bei dem das leitende Teil (50) des Umschaltemechanismus (32) in der Lage ist, eine elektrische Verbindung der Leitanordnung (60) und der ersten und der zweiten Betätigungseinrichtung (52, 54) mittels eines elektrischen Schiebekontakts zu liefern.

16. Ventil nach Anspruch 15, welches außerdem eine Federdruckeinrichtung (64) umfasst, welche zwischen der Leitanordnung (60) und dem Lageraufbau (12) angeordnet ist und in der Lage ist, die Leitanordnung (60) zu drücken, um diese in elektrischem Kontakt mit dem leitenden Teil (50) des Umschaltemechanismus (32) zu halten.

17. Ventil nach einem der Ansprüche 14 bis 16, wenn von einem der Ansprüche 6 bis 13 abhängig, bei dem das elektrisch-leitende Teil des Umschaltemechanismus (32) das mittlere Element (50) ist.

18. Ventil nach einem der vorhergehenden Ansprüche, welches außerdem eine Stoppeinrichtung (34f, 38) aufweist, welche dazu bestimmt ist, die Drehbewegung des starren Elements (34) zu stoppen, wenn der Umschaltemechanismus in der ersten oder zweiten Stellung ist.

19. Ventil nach Anspruch 18, wobei die Stoppeinrichtung umfasst:
- einen Stift (38) einstückig mit dem Lageraufbau (12);
- ein Loch (34f), welches im starren Element (34) gebildet ist und durch den Stift (38) läuft, und dessen Ränder in einer geführten Weise auf dem Stift (38) verschiebbar sind und in der Lage sind, in Kontakt mit dem letzteren zu kommen, wenn der Umschaltemechanismus (32) in der ersten oder zweiten Stellung ist.

20. Ventil nach einem der vorhergehenden Ansprüche, bei dem das Absperrorgan (22) so befestigt ist, um in Bezug auf den Lageraufbau (12) zu schwingen.

21. Ventil nach Anspruch 20, bei dem das Absperrorgan (22) drehbar mit dem starren Element (34) verriegelt ist.

22. Ventil nach einem der vorhergehenden Ansprüche, bei dem die Betätigungseinrichtung (26) von dem Lageraufbau (12) so umschlossen ist, um eine fluiddichte Abdichtung in Bezug auf die Kammer (16) zu bilden.

## Revendications

1. Soupape à commande électrique (10), en particulier pour une machine à laver, comportant
une structure de support (12) ayant, définie intérieurement, une chambre (16) pouvant être traversée par un écoulement de fluide et ayant une entrée (18) et au moins une première sortie (20a ; 20b) pour ledit écoulement de fluide ;
un obturateur (22) mobile de manière opérationnelle à l'intérieur de ladite chambre (16) entre une première et une deuxième position de travail, dans laquelle il ferme et ouvre respectivement, au moins en partie, la première sortie (20a ; 20b) ; et
des moyens d'actionnement commandés de manière électrique (26) associés audit obturateur (22) et capables de provoquer la commutation de l'obturateur (22) dans les première et deuxième positions de travail ; ladite soupape (10) étant **caractérisée en ce que** les moyens d'actionnement (26) comprennent
un mécanisme à bascule (32) capable de prendre deux positions stables et relié mécaniquement à l'obturateur (22), et comportant
un élément rigide (34) monté de façon rotative par rapport à la structure de support (12) et
un élément élastique (36) disposé entre ledit élément rigide (34) et la structure de support (12), et tendant à maintenir de manière stable le mécanisme à bascule (32) dans une première ou une deuxième configuration correspondant, respectivement, à la première et à la deuxième position de travail de l'obturateur (22) ; et
des premier et deuxième dispositifs d'actionnement (52, 54) qui peuvent être activés au moyen d'une commande électrique, sont liés de manière cinématique à l'élément rigide (34) et sont capables de prendre une première/deuxième disposition, quand les premier et deuxième dispositifs d'actionnement (52/54) sont activés/désactivés respectivement, en appliquant un mouvement oscillant sur l'élément rigide (34) du mécanisme à bascule (32), en provoquant ainsi la commutation de celui-ci dans la deuxième/première configuration respectivement.

2. Soupape selon la revendication 1, dans laquelle la chambre (16) a une deuxième sortie (20b) pour l'écoulement de fluide, et l'obturateur (22), quand il prend la première/deuxième position, ferme la première/deuxième sortie (20a/20b) et ouvre la deuxième/première sortie (20b/20a).

3. Soupape selon la revendication 1 ou 2, dans laquelle lesdits premier/deuxième dispositifs d'actionnement (52, 54) sont capables, lorsqu'ils sont activés, de passer d'un état allongé ou de repos à un état contracté ou de tension où ils entraînent l'élément rigide (34), en le déplaçant dans la deuxième/première configuration du mécanisme à bascule (32).

4. Soupape selon la revendication 3, dans laquelle les premier/deuxième dispositifs d'actionnement comportent des premier/deuxième fils conducteurs à mémoire de forme (52/54) reliés de manière cinématique à l'élément rigide (34).

5. Soupape selon l'une quelconque des revendications précédentes dans laquelle les premier et deuxième dispositifs d'actionnement (52, 54) agissent sur des côtés opposés par rapport à l'axe de rotation (Y-Y) de l'élément rigide (34).

6. Soupape selon l'une quelconque des revendications précédentes, dans laquelle le mécanisme à bascule (26) comporte également un élément intermédiaire (50) disposé de manière cinématique entre l'élément rigide (34) et les premier et deuxième dispositifs d'actionnement (52, 54).

7. Soupape selon la revendication 6, dans laquelle l'élément intermédiaire (50) et l'élément rigide (34) comportent respectivement une première et une deuxième partie d'entraînement (50b, 34g) qui coopèrent ensemble et, du fait de l'activation des premier/deuxième dispositifs d'actionnement (52/54), bloquent ensemble en rotation l'élément rigide (34) et l'élément intermédiaire (50).

8. Soupape selon la revendication 7, dans laquelle
pendant une première phase d'activation des premier/deuxième dispositifs d'actionnement (52/54), l'élément intermédiaire (50) réalise un mouvement de déplacement à vide, en étant déplacé par rapport à l'élément rigide (34) ; et
pendant une deuxième phase d'activation des premier/deuxième dispositifs d'actionnement (52/54), la première partie d'entraînement (50b) engage la deuxième partie d'entraînement (34g), en amenant l'élément intermédiaire (50) à être bloqué en rotation avec l'élément rigide (34) et en permettant la commutation du mécanisme à bascule (32) dans la deuxième/première configuration de travail.

9. Soupape selon la revendication 8, dans laquelle :
la première partie d'entraînement est une partie saillante (50b) de l'élément intermédiaire (50), et
la deuxième partie d'entraînement est une cavité (34g) formée dans l'élément rigide (34) et recevant avec jeu la partie saillante (50b) qui, pendant la deuxième phase dite, peut venir en contact avec les parois de ladite cavité (34g).

10. Soupape selon la revendication 9, dans laquelle la partie saillante de l'élément intermédiaire (50) est un premier bras radial (50b).

11. Soupape selon l'une quelconque des revendications 6 à 10, dans laquelle l'élément intermédiaire (50) a un deuxième et un troisième bras (50a, 50c) qui sont dirigés radialement et qui sont reliés respectivement aux premier et deuxième dispositifs d'actionnement (52, 54).

12. Soupape selon la revendication 11, dans laquelle le deuxième et le troisième bras (50a, 50c) sont situés de manière diamétralement opposée l'un à l'autre.

13. Soupape selon l'une quelconque des revendications 5 12, dans laquelle l'élément intermédiaire (50) peut tourner autour du même axe de rotation (Y-Y) de l'élément rigide (34).

14. Soupape selon l'une quelconque des revendications précédentes, dans laquelle le mécanisme à bascule (32) a une partie électriquement conductrice (50) reliée électriquement aux premier et deuxième dispositifs d'actionnement (52, 54) ; lesdits premier et deuxième dispositifs d'actionnement (52, 54) étant respectivement reliés à une première et une deuxième borne d'entrée (56, 58) ; ladite soupape (10) comportant également
une formation conductrice (60) qui est associée à la structure de support (12), comprend une borne de sortie (62), est électriquement reliée entre la partie conductrice (50) du mécanisme à bascule (26) et de la borne de sortie (62) et peut permettre à un courant électrique de passer entre les première/deuxième bornes d'entrée (56/58) et la borne de sortie (62), en activant de manière respective les premier/deuxième dispositifs d'actionnement (52, 54) et en passant à travers la partie électriquement conductrice (50).

15. Soupape selon la revendication 14, dans laquelle la partie conductrice (50) du mécanisme à bascule (32) peut procurer un raccordement électrique entre ladite formation conductrice (60) et les premier et deuxième dispositifs d'actionnement (52, 54) au moyen d'un contact électrique coulissant.

16. Soupape selon la revendication 15, comportant également des moyens de poussée élastiques (64) disposés entre la formation conductrice (60) et la structure de support (12) et capables de pousser la formation conductrice (60), en la maintenant en contact électrique avec la partie conductrice (50) du mécanisme à bascule (32).

17. Soupape selon l'une quelconque des revendications 14 à 16 lorsqu'elle est rattaché à l'une des revendications 6 à 13, dans laquelle la partie électriquement conductrice du mécanisme à bascule (32) est l'élément intermédiaire (50).

18. Soupape selon l'une quelconque des revendications précédentes, comportant des moyens de butée (34f, 38) prévus pour arrêter une rotation de l'élément rigide (34) quand le mécanisme à bascule est dans la première ou deuxième configuration.

19. Soupape selon la revendication 18, dans laquelle les moyens de butée comportent :
un axe (38) faisant partie intégrante de la structure de support (12) ;
un oeillet (34f) qui est formé dans l'élément rigide (34) et est traversé par l'axe (38) et dont les bords peuvent coulisser d'une manière guidée sur ledit axe (38) et venir en contact avec ce dernier quand le mécanisme à bascule (32) est dans la première ou deuxième configuration.

20. Soupape selon l'une quelconque des revendications précédentes, dans laquelle l'obturateur (22) est monté de façon à osciller par rapport à la structure de support (12).

21. Soupape selon la revendication 20, dans laquelle l'obturateur (22) est bloqué en rotation avec l'élément rigide (34).

22. Soupape selon l'une quelconque des revendications précédentes, dans laquelle les moyens d'actionnement (26) sont enfermés par la structure de support (12) de façon à former un joint étanche au fluide par rapport à la chambre (16).
